# EUROPÄISCHE PATENTSCHRIFT

(11) **EP 2 018 679 B1**
(45) Veröffentlichungstag und Bekanntmachung des Hinweises auf die Patenterteilung: **14.04.2010**
(21) Anmeldenummer: 06828659.0
(22) Anmeldetag: 13.12.2006
(51) Int. Cl.: H01M 10/50, H01M 2/12, H01M 2/10, H01M 10/52, H01M 10/42

(54) **WÄRMETAUSCHER FÜR ENERGIESPEICHER**
HEAT EXCHANGER FOR AN ENERGY STORAGE DEVICE
ÉCHANGEUR THERMIQUE POUR ACCUMULATEUR D'ÉNERGIE

(30) Priorität: 19.04.2006 DE 102006018329
(43) Veröffentlichungstag der Anmeldung: 28.01.2009
(73) Patentinhaber: TEMIC Automotive Electric Motors GmbH, 10553 Berlin (DE)
(72) Erfinder: RUDORFF, Axel, 12623 Berlin (DE); GÜNER, Nevzat, 12107 Berlin (DE)
(74) Vertreter: Büchner, Jörg
(86) Internationale Anmeldenummer: PCT/DE2006/002222
(87) Internationale Veröffentlichungsnummer: WO 2007/118437

(56) Entgegenhaltungen:
- EP-A1- 0 454 017
- EP-A1- 1 011 156
- WO-A-2006/108529
- WO-A1-99/05746
- US-A1- 2005 255 379

## Beschreibung

Die Erfindung betrifft einen Wärmetauscher für einen Energiespeicher, der in einem Fahrzeug, vorzugsweise einem hybridgetriebenen Fahrzeug, eingebaut ist. Als Hybridfahrzeug bezeichnet man ein Fahrzeug, in welchem verschiedene Antriebskonzepte kombiniert werden; üblicherweise erfolgt eine Kombination einer Brennkraftmaschine mit einer elektrischen Maschine.

Die elektrische Maschine ist in der Regel als Starter/Generator und/oder als elektrischer Antrieb ausgeführt. Als Generator ermöglicht sie eine Rekuperation von Bremsenergie, d.h. die Bewegungsenergie des Fahrzeugs wird durch den Generator in elektrische Energie umgeformt und gespeichert. Die Funktion des Starters ermöglicht ein Anlassen des Verbrennungsmotors. Der Einsatz der elektrischen Maschine als zusätzlicher Antrieb ermöglicht die Darstellung eines zusätzlichen Drehmoments z.B. zum Beschleunigen des Fahrzeugs oder zum rein elektrischen Antrieb des Fahrzeugs. Weiterhin weisen Hybridfahrzeuge mindestens eine Elektronik zur Steuerung des Energieflusses und einen Energiespeicher auf.

Der Energiespeicher besteht aus einer Serienschaltung von Energiespeicherzellen und weiteren Elektronikkomponenten. Die Energiespeicherzellen werden üblicher Weise zusammen mit der Steuerelektronik in einem geschlossenen Gehäuse innerhalb des Fahrzeugs angebracht. Zum Ableiten eventuell aus den Energiespeicherzellen austretender Gase ist das Gehäuse mit einer definierten Öffnung oder Undichtigkeit versehen. Durch die hohen Leistungen einer elektrischen Maschine in einem Hybridantrieb entsteht u.a. im Energiespeicher eine hohe abzuführende Verlustwärme, welche über Wärmetauscher, die zwischen den Energiespeicherzellen angebracht sind, gezielt nach außen transportiert und/oder durch umströmende Luft abgeführt wird.

Nachteilig an einer solchen Ausführung ist, dass sich insbesondere bei der Montage des Energiespeichers außerhalb des Fahrgastraums die Ableitung der im Fehlerfall aus den Energiespeicherzellen austretenden Gase als schwierig gestaltet, da einerseits hier hohe Anforderungen an die Dichtigkeit des Gehäuses gestellt werden, um Schmutz und Feuchtigkeit von den Batteriezellen fern zu halten, und das Gehäuse andererseits eine gewisse Undichtigkeit zur Gasableitung und/oder zur Ableitung von eventuell auftretendem Kondenswasser aufweisen muss. Die geforderte Dichtigkeit steht im Widerspruch zur geforderten Ableitung von unerwünschten Gasen bzw. Flüssigkeiten.
Ein weiterer Nachteil ist die bisher übliche Anordnung der Wärmetauscher zwischen den Energiespeicherzellen zur Abführung der Verlustwärme, wie sie z.B. in der DE 90 11 893 U1 gezeigt wird. Durch eine solche Anordnung wird das Volumen des Energiespeichers erhöht, was insbesondere bei Einbau in einem Kraftfahrzeug aufgrund des immer größer werdenden Platzmangels unerwünscht ist. Ein Verzicht auf diese Wärmetauscher und eine Kühlung ausschließlich durch umströmende Luft kommt aber aufgrund der hohen Verlustwärme in den Energiespeicherzellen und dem hierfür mangelhaften Luftkühlung nicht in Frage.

Aufgabe der Erfindung ist es, die beide oben genannten Nachteile des Standes der Technik zu vermeiden und einen kompakten Energiespeicher zur Verfügung zu stellen, dessen Gehäuse die für die Anordnung außerhalb des Fahrgastraums geforderte Dichtigkeit erfüllt und gleichzeitig erlaubt, im Fehlerfall austretende Gase und/oder Flüssigkeiten nach außen abzuführen.

Die erfindungsgemäße Lösung sieht vor, dass der Wärmetauscher mindestens zum Teil zumindest eine Gehäuseseite bildet und der Wärmetauscher Durchbrüche aufweist, über welche die Sicherheits-Berstöffnungen der Energiespeicherzellen mit der Gehäuseumgebung in Verbindung stehen.

Durch die erfindungsgemäße Lösung wird die Funktion des Wärmetauschers erweitert durch die Integration von mehreren Funktionen des Gehäuses bei gleichzeitiger Reduzierung der Bauteile.

Der Wärmetauscher ist als tragendes Teil des Gehäuses ausgeführt, wodurch einerseits eine Gehäusewand eingespart werden kann und andererseits auf einen im Innern des Gehäuses angeordneten Wärmetauscher verzichtet werden kann. Dies trägt zu einer Reduzierung der Bauteile des Energiespeichers und zu einer kompakteren Bauweise bei, da die Energiespeicherzellen durch Wegfall der in deren Zwischenräumen angeordneten Wärmetauscher enger aneinander angeordnet werden können. Außerdem verringert sich der Montageaufwand.

Die Durchbrüche im Wärmetauscher ermöglichen das Ableiten der gegebenenfalls aus den Sicherheits-Berstöffnungen der Energiespeicherzellen entweichenden Gase an die Umgebung. Öffnen die Sicherheits-Berstöffnungen der Energiespeicherzellen, werden austretende Gase durch die Durchbrüche im Wärmetauscher gezielt nach außen abgeleitet. Dies verhindert einen unkontrollierten Überdruck mit Explosionsgefahr im Innern des Speichers und eine Beschädigung der zusätzlich verbauten Elektronik. Aus diesem Grund kann das Gehäuse komplett abgedichtet werden, wodurch die Gefahr einer Verschmutzung der Energiespeicherzellen oder der Elektronikeinheit durch in das Gehäuse eindringenden Schmutz oder Flüssigkeit weiter verringert wird. Auf die im Stand der Technik gebräuchliche definierte Öffnung oder Undichtigkeit kann verzichtet werden.

Vorzugsweise sind die Energiespeicherzellen am Wärmetauscher befestigt, damit der Wärmetauscher nicht nur die von den Energiespeicherzellen ausgehende Wärmestrahlung aufnimmt, sondern ein direkter Wärmeübergang von den Energiespeicherzellen auf den Wärmetauscher stattfinden kann. Die Befestigung der Energiespeicherzellen kann indirekt durch Einschieben dieser in einem z.B. am Wärmetauscher befestigten Gehäuse geschehen oder auch mittels einer Vergußmasse, welche vorzugsweise eine hohe thermische Leitfähigkeit aufweist und/oder elektrisch isolierend ist.

In einer bevorzugten Ausführung sind die Sicherheits-Berstöffnungen an einem axialen Ende der Energiespeicherzelle angeordnet und die Energiespeicherzelle ist derart am Wärmetauscher befestigt, dass die Sicherheits-Berstöffnungen direkt an den Durchbrüchen im Wärmetauscher liegen. Dadurch werden entweichende Gase aus den Energiespeicherzellen direkt von der Sicherheits-Berstöffnung in die Umgebung abgegeben, ohne dass diese erst im Innern des Gehäuses z.B. durch eine Schlauch- oder Rohrverbindung nach außen geführt werden müssen. Dies verringert den Montageaufwand und die Störanfälligkeit.

Die Durchbrüche sind vorzugsweise kleiner als der Durchmesser der Energiespeicherzellen, so dass lediglich das mit der Sicherheits-Berstöffnung versehene axiale Ende der Energiespeicherzellen mit der Umgebung verbunden ist. Eine Abdichtung zwischen der Oberfläche der Energiespeicherzellen und dem Wärmetauscher - sei es von Innen oder von Außen - sorgt dafür, dass keine Umgebungsluft durch Durchbrüche in das Innere des Gehäuses gelangen kann.

Da das Elektronikmodul zur Steuerung des Energieflusses des Energiespeichers ähnliche Umgebungsbedingungen wie die Energiespeicherzellen benötigt - nämlich möglichst wenig Schmutz und möglichst hohe Wärmeabfuhr - ,bietet es sich an, dieses ebenfalls innerhalb des Gehäuses zu platzieren und mit dem Wärmetauscher zu verbinden.

Es kann weiterhin vorgesehen sein, die Energiespeicherzellen komplett in einer Vergussmasse einzugießen. Dies hat den Vorteil, dass die kälteste Stelle an den Energiespeicherzellen der mit dem Wärmetauscher verbundene Boden der Zelle ist. Da sich Kondenswasser immer an der kältesten Stelle bildet, wird dadurch der Taupunkt, d.h. der Temperaturbereich, in dem die Luft kondensiert, zum Boden der Zelle hin verlagert; vorzugsweise in den Bereich, welcher über die Durchbrüche mit der Umgebung in Verbindung steht. Da dieser Bereich fern der empfindlichen Elektronik liegt, wird diese vor dem Kondenswasser geschützt.

Kühlmedium des Wärmetauschers ist vorzugsweise Kühlflüssigkeit, welche den Wärmetauscher durchströmt. Als Kühlmittel kommt auch Luft in Frage, welche jedoch aufgrund der geringeren Wärmeaufnahme für die hohe Verlustwärme weniger geeignet ist. Auch eine Kühlung mittels expandierender Gase oder Flüssigkeiten, wie sie bereits im Stand der Technik eingesetzt wird, ist mit dem erfindungsgemäßen Wärmetauscher möglich; jedoch ist deren Verwirklichung aufwendiger als eine reine Flüssigkeitskühlung, weshalb die Flüssigkeitskühlung zu bevorzugen ist.

Weitere Merkmale, Vorteile und vorteilhafte Ausgestaltungen der Erfindung ergeben sich aus der nachstehenden Beschreibung der Erfindung anhand der beigefügten Zeichnungen.

Es zeigen:
- Figur 1: Anordnung der Energiespeicherzellen auf dem erfindungsgemäßen Wärmetauscher
- Figur 2: Anordnung gemäß Fig. 1 mit Darstellung der Durchbrüche im Wärmetauscher
- Figur 3: Anordnung mit einem Elektronikmodul
- Figur 4: Geschlossener Energiespeicher

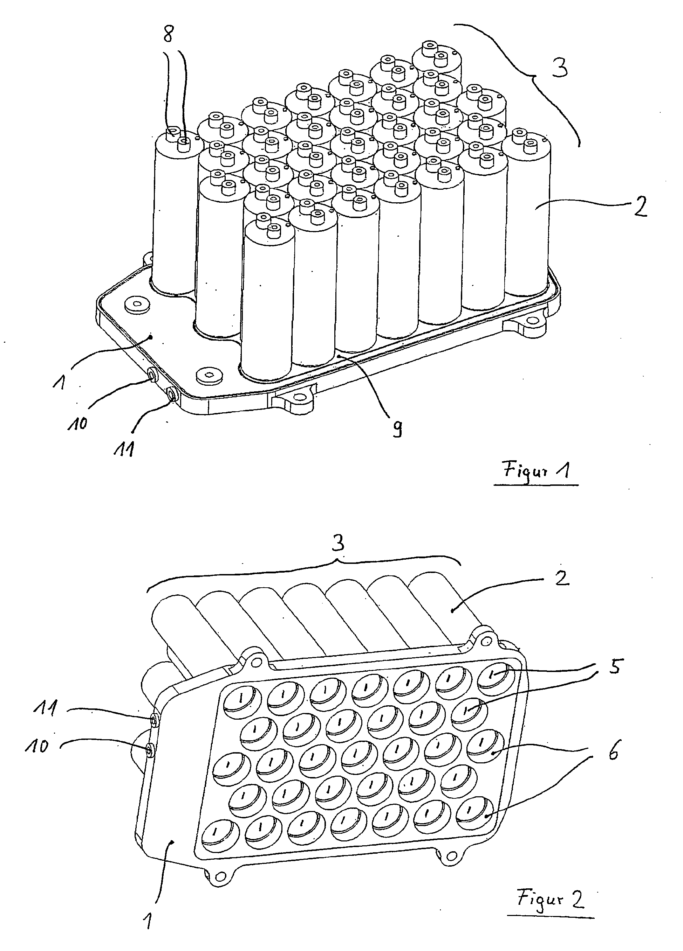

Figur 1 zeigt die Anordnung von Energiespeicherzellen (2) auf dem erfindungsgemäßen Wärmetauscher (1). Die Energiespeicherzellen (2) sind auf dem Wärmetauscher (1) befestigt und stehen mit diesem in wärmeleitender Verbindung. Die Befestigung erfolgt an der den Elektroden (8) abgewandten Seite, welche die Sicherheits-Berstöffnungen (5) (Fig. 2) aufweisen. Zur Unterstützung der Befestigung kann der Wärmetauscher (1) Aussparungen (9) aufweisen, in welche die Energiespeicherzellen (2) eingelassen werden können. Dies kann so weit gehen, dass die Energiespeicherzellen (2) in die in Fig. 2 gezeigten Durchbrüche zumindest teilweise eingeschoben werden können. Die Energiespeicherzellen (2) können sehr eng aneinander angeordnet sein, da auf einen zwischen diesen liegenden Wärmetauscher verzichtet werden kann.
Der Wärmetauscher (1) weist einen Einlass (10) und eine Auslass (11) zur Zu- und Abführung eines Kühlmittels auf, welches die vom den Energiespeicherzellen (2) in den Wärmetauscher (1) übertragene Wärme abführt.

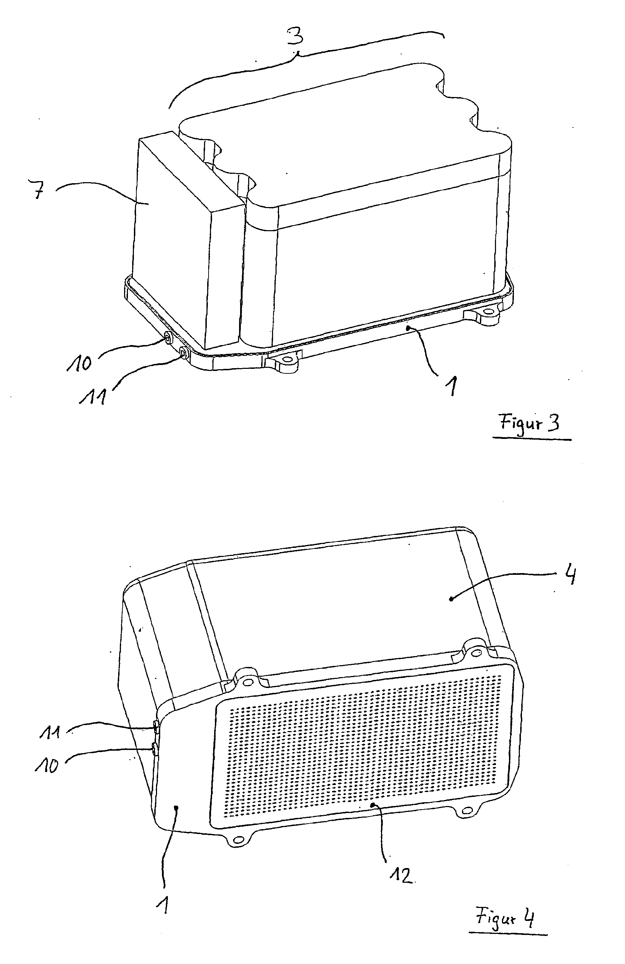

Figur 2 zeigt die in Fig. 1 beschriebene Anordnung von unten, so dass die Durchbrüche (6) im Wärmetauscher (1) sichtbar werden. Wie hier gut zu sehen ist, befinden sich die Sicherheits-Berstöffnungen (5) der Energiespeicherzellen (2) direkt über den Durchbrüchen (6), wodurch die Sicherheits-Berstöffnungen (5) in direktem Kontakt mit der Umgebung stehen. Im Falle eines Ausgasens einer Energiespeicherzelle (2) öffnet sich dessen Sicherheits-Berstöffnung (5) und führt die Gase direkt an die Umgebungsluft ab, ohne dass im Innern des Gehäuses (4) ein Überdruck entsteht, der im Extremfall zur Explosion führen kann. Damit über die Durchbrüche (6) keine Umgebungsluft in das Innere des Gehäuses (4) (siehe Fig. 4) gelangt, ist die Energiespeicherzelle (2) im Durchmesser größer als der Durchbruch (6) und so platziert, dass der Durchbruch (6) von der Energiespeicherzelle (2) abgedeckt ist. Zur Vervollständigung der Abdichtung können von außen oder von Innen Dichtmasse oder Dichtungen um den Umfang der Energiespeicherelemente angebracht werden. Die Dichtmasse kann gleichzeitig auch durch die Vergussmasse gebildet werden, mit der die Energiespeicherzellen (2) auf dem Wärmetauscher (1) befestigt werden.

In Figur 3 ist neben dem Energiespeicher (3) noch ein Elektronikmodul (7) auf dem Wärmetauscher (1) angebracht, was dahingehend sinnvoll ist, dass dadurch die Verbindungen zwischen Elektronikmodul, welches den Energiefluss des Energiespeichers (3) steuert, und Energiespeicher (3) sehr kurz gehalten werden, was der elektromagnetischen Verträglichkeit zu Gute kommt.

In Figur 4 ist das gesamte Energiespeichermodul dargestellt, wie es im Kraftfahrzeug verbaut wird. Das Gehäuse (4) bedeckt sowohl Elektronikmodul (7) und Energiespeicher (3) und kann am Wärmetauscher (1) mittels üblicher Verbindungstechnik, wie z.B. Schrauben, Verstemmen, Schweißen oder Kleben, befestigt werden. Man kann hier gut erkennen, dass der Wärmetauscher (1) praktisch eine Seite des Gehäuses (4) bildet und auch als Gehäuse ausgebildet ist. Zum Schutz der empfindlichen Elektronik vor elektromagnetischen Feldern ist an der Außenseite des Wärmetauschers (1) über den Durchbrüchen (6) ein Blech (12) mit feiner Lochstanzung angebracht; gleichzeitig kann dieses Blech auch als Hitzeschild dienen.

### Bezugszeichenliste

- 1: Wärmetauscher
- 2: Energiespeicherzelle
- 3: Energiespeicher
- 4: Gehäuse
- 5: Sicherheits-Berstöffnung
- 6: Durchbrüche
- 7: Elektronikmodul
- 8: Elektroden
- 9: Aussparung
- 10: Einlass
- 11: Auslass
- 12: Blech

## Patentansprüche

1. Wärmetauscher (1) für einen aus zumindest einer Energiespeicherzelle (2) bestehenden Energiespeicher (3), welcher mit mindestens einer Energiespeicherzelle (2) des Energiespeichers (3) in wärmeleitender Verbindung steht, wobei der Energiespeicher (3) von einem Gehäuse (4) umschlossen wird und wobei die Energiespeicherzellen (2) mindestens eine Sicherheits-Berstöffnung (5) zur Abgabe von Gasen an deren Umgebung aufweisen
**dadurch gekennzeichnet, dass**
der Wärmetauscher (1) mindestens zum Teil zumindest eine Gehäuseseite bildet und der Wärmetauscher (1) Durchbrüche (6) aufweist, über welche die Sicherheits-Berstöffnungen (5) der Energiespeicherzellen (2) mit der Gehäuseumgebung in Verbindung stehen.

2. Wärmetauscher nach einem der Ansprüche 1 bis 3, **dadurch gekennzeichnet, dass** die Energiespeicherzellen (2) am Wärmetauscher (1) befestigt sind.

3. Wärmetauscher nach Anspruch 2, **dadurch gekennzeichnet, dass** die Befestigung der Energiespeicherzellen (2) mit einer Vergussmasse erfolgt, welche die thermische Leitfähigkeit verbessert.

4. Wärmetauscher nach einem der Ansprüche 2 oder 3, **dadurch gekennzeichnet, dass** die Befestigung der Energiespeicherzellen (2) mit einer elektrisch isolierenden Vergussmasse erfolgt.

5. Wärmetauscher nach einem der Ansprüche 1 bis 4, **dadurch gekennzeichnet, dass** die Sicherheits-Berstöffnungen (5) an den Durchbrüchen (6) im Wärmetauscher (1) liegen.

6. Wärmetauscher nach einem der Ansprüche 1 bis 5, **dadurch gekennzeichnet, dass** der Innenraum des Gehäuses (4) gegenüber den Durchbrüchen (6) im Wärmetauscher (1) abgedichtet ist.

7. Wärmetauscher nach einem der Ansprüche 1 bis 6, **dadurch gekennzeichnet, dass** er mit mindestens einem Elektronikmodul (7) in wärmeleitender Verbindung steht.

8. Wärmetauscher nach Anspruch 7, **dadurch gekennzeichnet, dass** das Elektronikmodul (7) im Innern des Gehäuses (4) am Wärmetauscher (1) befestigt ist.

9. Wärmetauscher nach einem der Ansprüche 1 bis 8, **dadurch gekennzeichnet, dass** als Kühlmedium Luft oder expandierende Gase oder Flüssigkeiten oder eine Kombination dessen eingesetzt wird.

## Claims

1. A heat exchanger (1) for an energy storage unit (3) consisting of at least one energy storage cell (2), which is connected in a heat conducting manner with at least one energy storage cell (2) of the energy storage unit (3), wherein the energy storage unit (3) is enclosed by a housing (4), and wherein the energy storage cells (2) comprise at least one safety burst opening (5) for the emission of gases to their ambient environment
**characterized in that**
the heat exchanger (1) at least partially forms at least one housing side, and the heat exchanger (1) comprises apertures (6) via which the safety burst openings (5) of the energy storage cells (2) are connected to the ambient environment of the housing.

2. A heat exchanger according to any one of claims 1 to 3, **characterized in that** the energy storage cells (2) are attached to the heat exchanger (1).

3. A heat exchanger according to claim 2, **characterized in that** the energy storage cells (2) are attached to a casting compound which improves heat conductivity.

4. A heat exchanger according to either of claims 2 or 3, **characterized in that** the energy storage cells (2) are attached with an electrically insulating casting compound.

5. A heat exchanger according to any one of claims 1 to 4, **characterized in that** the safety burst openings (5) lie on the apertures (6) in the heat exchanger (1).

6. A heat exchanger according to any one of claims 1 to 5, **characterized in that** the inner area of the housing (4) is sealed opposite the apertures (6) in the heat exchanger (1).

7. A heat exchanger according to any one of claims 1 to 6, **characterized in that** it is connected to at least one electronic module (7) in a heat conducting connection.

8. A heat exchanger according to claim 7, **characterized in that** the electronic module (7) is attached in the interior of the housing (4) on the heat exchanger (1).

9. A heat exchanger according to any one of claims 1 to 8, **characterized in that** air or expanding gases or fluids, or a combination of these, is used as a coolant.

## Revendications

1. Échangeur de chaleur (1) pour un accumulateur d'énergie (3) se composant d'au moins une pile (2), lequel se trouve en liaison thermique avec au moins une pile (2) de l'accumulateur d'énergie (3), l'accumulateur d'énergie (3) étant entouré d'un boîtier (4) et les piles (2) présentant au moins une ouverture de sécurité anti-éclatement (5) pour le dégagement de gaz dans leur environnement
**caractérisé en ce que**
l'échangeur de chaleur (1) forme au moins partiellement au minimum un côté de boîtier et l'échangeur de chaleur (1) présente des passages (6) par lesquels les ouvertures de sécurité anti-éclatement (5) des piles (2) sont en communication avec l'environnement du boîtier.

2. Échangeur de chaleur selon l'une des revendications 1 à 3, **caractérisé en ce que** les piles (2) sont fixées sur l'échangeur de chaleur (1).

3. Échangeur de chaleur selon la revendication 2, **caractérisé en ce que** la fixation des piles (2) est effectuée avec une masse de scellement, laquelle améliore la conduction thermique.

4. Échangeur de chaleur selon l'une des revendications 2 ou 3, **caractérisé en ce que** la fixation des piles (2) est effectuée avec une masse de scellement électriquement isolante.

5. Échangeur de chaleur selon l'une des revendications 1 à 4, **caractérisé en ce que** les ouvertures de sécurité anti-éclatement (5) sont disposées contre les passages (6) dans l'échangeur de chaleur (1).

6. Échangeur de chaleur selon l'une des revendications 1 à 5, **caractérisé en ce que** l'espace intérieur du boîtier (4) est étanchéifié par rapport aux passages (6) dans l'échangeur de chaleur (1).

7. Échangeur de chaleur selon l'une des revendications 1 à 6, **caractérisé en ce qu'**il se trouve en conduction thermique avec au moins un module électronique (7).

8. Échangeur de chaleur selon la revendication 7, **caractérisé en ce que** le module électronique (7) est fixé sur l'échangeur de chaleur (1) dans l'intérieur du boîtier (4).

9. Échangeur de chaleur selon l'une des revendications 1 à 8, **caractérisé en ce que** l'air ou des gaz d'expansion ou des liquides ou une combinaison de ceux-ci sont utilisés comme fluide de refroidissement.
